# EUROPÄISCHE PATENTSCHRIFT

(11) **EP 1 985 107 B1**
(45) Veröffentlichungstag und Bekanntmachung des Hinweises auf die Patenterteilung: **11.11.2009**
(21) Anmeldenummer: 07711540.0
(22) Anmeldetag: 15.02.2007
(51) Int. Cl.: H04N 1/60

(54) **VERFAHREN ZUR TRANSFORMATION VON FARBWERTEN**
METHOD FOR TRANSFORMATION OF COLOUR VALUES
PROCEDE POUR LA TRANSFORMATION DE VALEURS DE COULEUR

(30) Priorität: 17.02.2006 DE 102006007852
(43) Veröffentlichungstag der Anmeldung: 29.10.2008
(73) Patentinhaber: GMG GmbH & Co. KG, 72027 Tübingen (DE)
(72) Erfinder: WEIHING, Jörg, 72072 Tübingen (DE); RADTKE, David, 72070 Tübingen (DE); WURSTER, Jürgen, 72135 Dettenhausen (DE)
(74) Vertreter: Stenger, Watzke & Ring
(86) Internationale Anmeldenummer: PCT/EP2007/001308
(87) Internationale Veröffentlichungsnummer: WO 2007/093411

(56) Entgegenhaltungen:
- EP-A- 1 768 381
- US-A1- 2004 056 867
- BRAUN K ET AL.: "Development and Evaluation of SIx Gamut-Mapping Algorithms for Pictorial Images" PROCEEDINGS OF THE 7TH IS&T/SID COLOR IMAGING CONFERENCE, 16. November 1999 (1999-11-16), Seiten 144-148, XP008078678
- BRAUN G ET AL.: "Gamut Mapping for Pictorial Images" TAGA PROCEEDINGS, 1999, Seiten 645-660, XP008078676

## Beschreibung

Die vorliegende Erfindung betrifft ein Verfahren zur Transformation von Farbwerten aus einem Ausgangsfarbraum in einen Zielfarbraum.

### Grundlagen:

Vom Menschen unterscheidbare Farben entstehen durch das Licht verschiedener Wellenlängen. Jede Wellenlänge hat ihre eigene Farbe. Das menschliche Auge verfügt über Rezeptoren, die auf unterschiedliche Wellenlängen ansprechen. Einen auf Rot-, einen auf Grün- und einen auf Blauanteile eines auf das Auge auftreffenden Lichtes ermöglichen bei Definition eines Standardbeobachters jede Spektralkurve in die drei Zahlenwerte XYZ aufzugliedern. Für die industrielle Reproduktion von Farben ist diese Beschreibung jedoch nicht ausreichend und diese Zahlenwerte korrelieren nur wenig mit den visuell wahrgenommenen Farbeigenschaften. Der Farbeindruck entsteht nach der Aufnahme eines Lichtspektrums durch das Auge im Gehirn. Farbreiz ist die physikalisch meßbare Strahlung, die in einer Lichtquelle entsteht und vom beobachteten Körper reflektiert wird. Die Farbvalenz ist das Resultat der visuellen Wahrnehmung im Beobachterauge. Der Farbreiz läßt sich physikalisch messen und wird daher als Grundlage für Farbmodelle verwendet.

Ursprünglich entwickelte Zweifarbmodelle umfaßten eine zweidimensionale Farbtafel (x, y), die über einen Helligkeitswert (Y) variiert worden. Es erwies sich als problematisch bei diesem Farbmodell, daß empfindungsgemäß gleiche Abstände nicht auch gleichen Zahlenabständen entsprechen.

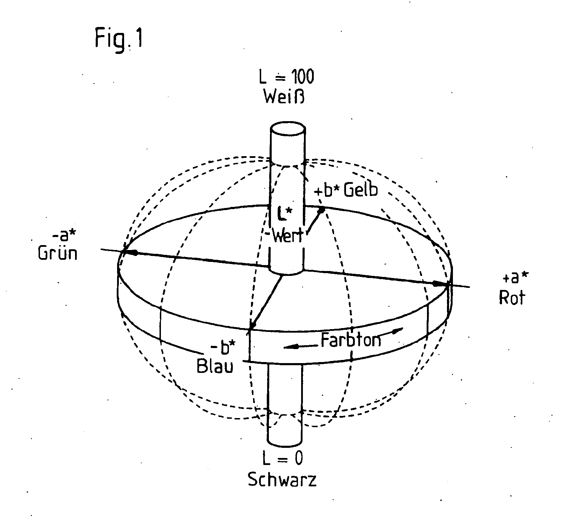

Aus der Erkenntnis, daß eine Farbe nie gleichzeitig blau und gelb bzw. rot und grün sein kann, wurde auf der Gegenfarbentheorie das Lab Farbmodell entwickelt. L* beschreibt die Helligkeit, a* den Rot/Grün-Wert und b* den Gelb/Blau-Wert einer Farbe. In Fig. 1 ist eine schematische Darstellung des Lab-Modelles gezeigt. Die Definition einer Farbe nach dem Lab-Farbmodell ist geräteunabhängig.

Eine Vielzahl technischer Geräte, Farbmonitore, Scanner, Dia-Belichter, Diaprojektoren, Digitalkameras und dergleichen arbeiten nach einem additiven Farbmodell. Projiziert man die additiven Leuchtfarben Rot, Grün und Blau übereinander, addieren sie sich zu Weiß. Zunehmende Farbintensität macht das Bild heller. Konventionell werden 256 Dichtestufen von 0 (keine Farbe) bis 255 (volle Farbe) nachmeßbar dargestellt. Es handelt sich um das RGB-Farbmodell, welches es auch erlaubt, anstelle der Dichtestufen für die drei Farben Prozentangaben zu verwenden. Bei der digitalen Verarbeitung werden also nach dem RGB-Modell 3 Bit pro Bildpunkt benötigt, und es lassen sich aus dem Produkt 256 x 256 x 256 insgesamt 16,7 Mio. Farben darstellen.

Anders verhält es sich jedoch beim Farbauftrag. Drucker, Druckmaschinen und dergleichen arbeiten nicht mit Leuchtfarben, sondern mit deckenden Grundfarben. Hierfür wurde das subtraktive Farbmodell entwickelt. Je mehr Farben übereinander gedruckt werden, um so dunkler ist das Ergebnis. Alle Farben in voller Intensität übereinander ergeben Schwarz. Diese Farben sind Zyan (Grün/Blau), Gelb und Magenta (Purpur). Zusätzlich wird Schwarz verwendet. Gelb, Grün/Blau und Magenta entstehen, indem man jeweils zwei der additiven Primärfarben Rot, Grün und Blau zu gleichen Teilen mischt. Zwar ergeben Gelb und Purpur übereinandergedruckt theoretisch Schwarz, drucktechnisch ergibt sich jedoch ein dunkles Grau oder Braun. Durch die zusätzliche Verwendung von Schwarz wird deshalb der tiefe Eindruck verstärkt und erspart darüber hinaus Druckfarbe. Aus den englischen Bezeichnungen der Farben Zyan, Gelb-Yellow, Magenta und einen Umrechnungsvorgang auf Schwarz, der einen K-Wert ergibt, wurde das CMYK-Farbmodell entwickelt.

Es ist offensichtlich, daß in einem Farbmodell CMYK hohe Werte zu dunklen Tönen führen, während in einem RGB-Farbmodell hohe Werte zu hellen Tönen führen. Ein kontrastreich gedrucktes Bild erscheint somit am Monitor blaß. Aus diesem Grunde, aber auch um die Darstellungen auf gleichartigen Systemen kompatibel zu machen, ist es erforderlich, Farbwerte eines Ausgangsfarbraumes in einen Zielfarbraum zu konvertieren.

### Stand der Technik

Für die Konvertierung von Farbwerten von einem Farbraum in einen anderen wurde ein ICC-Standard festgelegt.

Sind der Ausgangsfarbraum und der Zielfarbraum von gleichem Umfang, beispielsweise auch von gleicher Art, oder ist der Zielfarbraum sogar größer als der Ausgangsfarbraum, so kann jeder Farbwert des Ausgangsfarbraumes auf einen entsprechenden Farbwert des Zielfarbraumes abgebildet werden. Auf diese Weise bedarf es keiner besonderen Maßnahmen.

Probleme treten dann auf, wenn beispielsweise Farbräume unterschiedlicher Farbmodelle aufeinander abzubilden sind. Der oben beschriebene RGB-Farbraum hat häufig einen deutlich größeren Farbumfang als der CMYK-Farbraum eines Drucksystems oder dergleichen. Die Anzahl der maximal darstellbaren Farben eines Farbraumes wird "gamut" genannt. Daraus wurde abgeleitet der Begriff gamut mapping, der für die Strategien steht, wie nicht mehr darstellbare Farben des Ausgangsfarbraumes durch Farben des Zielfarbraumes ersetzt werden, ohne daß sich der Gesamtfarbeindruck des Endergebnisses ändert.

Der ICC-Standard kennt ein Verfahren, welches Farbmetrischer Rendering Intent (colorimetric) genannt wird. Ist der Zielfarbraum genauso groß oder größer als der Quellfarbraum, so wird jeder Eingangswert im Zielfarbraum visuell gleich abgebildet, da der kleinste DeltaE-Abstand das Kriterium der Farbtransformation ist.

Verwendet wird er zum Beispiel bei der Simulation eines Offsetdrucks mit CMYK-Daten durch einen digitalen Proofdrucker. Der Farbumfang eines digitalen Proofdruckers ist in der Regel größer als der des Offsetdrucks. Bei der Simulation des Offsets werden die Druckfarben durch das Druckprofil nach Lab umgesetzt und dann vom farbmetrischen Rendering Intend des Proofdruckerprofils umgerechnet.

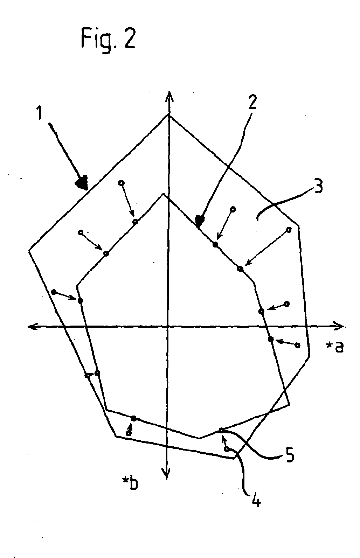

Geschieht die Umrechnung von einem großen in einen kleineren Farbraum, so werden alle nicht abbildbaren Farben auf die nächste druckbare Farbe heruntergerechnet. Der größere Farbraum wird an den Grenzen des druckbaren Bereichs abgeschnitten. Die Farbwerte des Quellmediums, die innerhalb des Zielmediums liegen, werden nicht verändert. Die Fig. 2 zeigt eine schematische Darstellung für dieses Verfahren. Dabei werden praktisch alle nicht mehr darstellbaren Farben des größeren Quellfarbraumes jeweils auf Randpunkte des kleineren Zielfarbraumes abgebildet, praktisch der überstehende Rand des Quellfarbraumes abgeschnitten.

Ein weiteres Verfahren des ICC-Standards ist mit Fotografischer Rendering Intend (perceptual) bezeichnet. Dieser Rendering Intend dient der Umsetzung von einem großen in einen kleineren Farbraum. Es wird unter Berücksichtigung der Papier-, Dynamik- und Farbeigenschaften des Ausgabesystems der gesamte Farbraum komprimiert. Dabei wird so vorgegangen, dass das menschliche Auge die Abbildung im Zielfarbraum als möglichst originalgetreu wahrnimmt. Es werden alle im Bild enthaltenen Farbwerte verändert, unabhängig davon, ob sie bereits im wiedergebbaren Farbbereich des Zielfarbraums liegen oder außerhalb. Das Bild ist nach der Farbtransformation farblich ausgewogen, jedoch kann es eher blaß wirken, da häufig die Werte für die Chromazität reduziert werden.

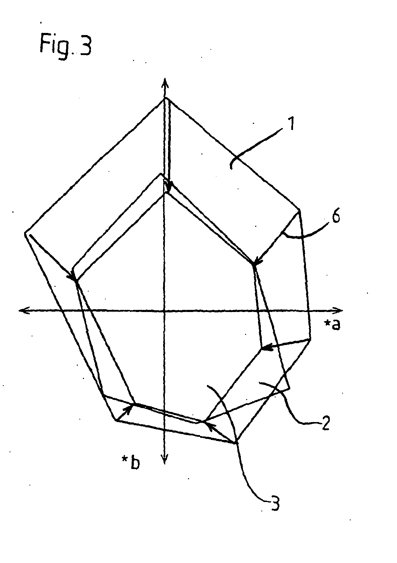

Der fotografische Rendering Intend wird zum Beispiel bei der Überführung eines RGB- in einen CMYK-Farbraum verwendet. Fig. 3 zeigt eine schematische Darstellung, gemäß welcher der größere Quellfarbraum in den kleineren Zielfarbraum "hineingestaucht" wird.

Werden die Farben des größeren Ausgangsfarbraumes am Rand des Zielfarbraumes nach dem ersten Verfahren abgeschnitten, bewirkt dies insbesondere einen optischen Detailverlust, vor allen in den dunklen Zonen. Gemäß dem zweiten Verfahren passen die Farben in den neuen Farbraum, dies geht jedoch auf Kosten des Kontrastes. Beide bekannten Verfahren führen nicht zu in allen Fällen anwendbaren befriedigenden Farbergebnissen.

K. Braun et al. schlagen in "Development and Evaluation of Six Gamut-Mapping Algorithms for Pictorial Images", Proceedings of the 7th IS&T Color Imaging Conference, 16.November 1999, S.144-148, verschiedene Farbraumtransformationen vor, welche Probleme bei Farbraumtransformationen und - kompressionen lösen.

G. Braun et al. behandeln in "Gamut Mapping for Pictorial Images", TAGA Proceedings, 1999, S. 645-660, ebenfalls Farbraumtransformationen.

Dokument US2004/0056867 (Chengwu Cui et al.) offenbart einen Algorithmus zur Farbraumtransformation, welcher besonders für Geschäftsgrafiken geeignet ist.

Dokument EP 1 768 381 (Sony Corporation) beansprucht ein Prioritätsdatum vom 8. September 2005 und ist damit ein Dokument unter Art. 54(3) EPÜ. Dieses Dokument offenbart ebenfalls ein Verfahren zur Farbraumtransformation und - kompression. Dabei werden Farben, die im Ausgangsfarbraum unterschiedliche Werte haben und die im Zielfarbraum aufgrund einer Farbraumkompression aber gleich sind, in einem weiteren Schritt wieder auseinandergeschoben, sodaß sie schließlich auch im Zielfarbraum unterschiedliche Werte haben.

### Beschreibung der Erfindung

Ausgehend vom vorbeschriebenen Stand der Technik liegt der Erfindung die **Aufgabe** zugrunde, ein Verfahren für die Transformation eines Ausgangsfarbraumes in einen Zielfarbraum bereitzustellen, bei welchem die oben beschriebenen Nachteile vermieden sind, insbesondere also zu starke Kompression des Farbraums, Detailverluste und Kontrastverluste minimiert sind.

Die technische **Lösung** dieser Aufgabe ergibt sich durch ein Verfahren gemäß Patentanspruch 1.

Im folgenden werden weitere Vorteile und Merkmale der Erfindung beschrieben, die erfindungswesentlich sind.

Gemäß der Erfindung wird von einem Ausgangsfarbraum und einem Zielfarbraum ausgegangen, welche beide in Bezug auf einen definierten Basisfarbraum stehen. Ausgangs- und Zielfarbraum können dem gleichen Modell entsprechen. Beispielsweise kann der Farbraum eines Digitaldruckers größer sein als der Farbraum einer Offsetdruckmaschine, obwohl beide im CMYK-System angesteuert werden. Die beiden Farbräume können aber auch unterschiedlichen Modellen zuzuordnen sein, beispielsweise ein Digitalkamerabild wird im Ausgangsfarbraum RGB beschrieben, welches vor dem Druck in den Zielfarbraum CMYK transformiert werden muß. Beide Farbräume lassen sich relativ zu einem Basisfarbraum, beispielsweise Lab oder aber auch xyY bzw. XYZ darstellen. In den Farbräumen wird zumindest eine Ebene oder eine Achse, meistens jedoch ein zentraler Raum einen Helligkeitsverlauf definieren. Dazu in der Regel senkrecht oder quer verlaufende Ebenen definieren die jeweiligen Farbvariationen.

Gemäß der Erfindung werden der Ausgangsfarbraum und der Zielfarbraum zunächst zumindest in Bezug auf wenigstens einen am Rand eines Farbraumes liegenden Farbwert in Deckung gebracht. Zu diesem Zweck wird jeder Farbwert des einen Farbraums auf einen entsprechenden Farbwert im Basisfarbraum umgerechnet, so daß wenigstens ein Randfarbwert des durch die Umrechnung entstehenden Farbraumes identisch ist mit dem gleichen Randfarbwert des anderen Farbraumes. So bietet es sich beispielsweise an, den Farbwertbereich zu nehmen, der den hellsten und/oder den Weißpunkt beschreibt. Ausgangsfarbraum und Zielfarbraum stimmen also zumindest im Weißpunkt überein. Um dies durchzuführen, wird beispielsweise der Abstand des Weißpunktes des Ausgangsfarbraumes zum Weißpunkt des Zielfarbraumes ermittelt und für jeden Punkt des Ausgangsfarbraumes wird der Farbwert um den gleichen Abstand innerhalb des Basisfarbraumes verschoben. Ausgangsfarbraum und Zielfarbraum stimmen also in Bezug auf den Weißpunkt überein. Grundsätzlich kann jedoch auch jeder andere eindeutig bestimmbare Punkt verwendet werden.

Gemäß einem weiteren Schritt wird nun durch Skalierung auch ein zweiter übereinstimmender Farbwertpunkt beider Farbräume festgelegt und jeder Punkt des einen Farbraumes wird soweit verschoben, um auch in einem zweiten Punkt übereinzustimmen. Es bietet sich an, hierfür den dunkelsten Helligkeitswert, praktisch den Schwarzpunkt zu wählen, wenn für den ersten übereinstimmenden Farbwert der Weißpunkt gewählt wurde. Es bietet sich dann an, den größeren Farbraum herunter zu skalieren. Hierzu kann das Verhältnis der Helligkeitsabstände zwischen Weißpunkt und Schwarzpunkt des kleineren Farbraumes zum Verhältnis zwischen Weißpunkt und Schwarzpunkt des größeren Farbraumes herangezogen werden. Dieses Verhältnis multipliziert mit dem Abstand des jeweils zu verschiebenden Farbwertes bewirkt, daß die Farbwerte vom Dunkeln zum Hellen gehend immer weniger verschoben werden.

Die Verschiebung erfolgt vorzugsweise parallel zu der Verbindungsachse zwischen dem ersten in Deckung gebrachten Farbwert und dem zweiten in Deckung gebrachten Farbwert. Das Ergebnis dieser Skalierung sind zwei in Deckung stehende Farbräume, die in jedem Fall hinsichtlich der Ebene bzw. des Raums zwischen dem ersten und zweiten in Deckung gebrachten Farbwert übereinstimmen. In den Randbereichen kann sich durch die Skalierung sowohl einen Bereich ergeben, in dem der Ausgangsfarbraum Farbwerte aufweist, die außerhalb des Zielfarbraums liegen und umgekehrt.

In einem weiteren Schritt wird nun ein jeder Farbwert des Ausgangsfarbraumes, der außerhalb des Zielfarbraumes liegt in den Farbwert des Zielfarbraumes umgewandelt, der diesem Farbwert des Ausgangsfarbraumes am nächsten liegt.

Dies sind somit in den Randflächen des Zielraumes liegende mehrfach belegte Farbwerte. Diese Umwandlung wird registriert.

Bezugnehmend auf den Zielfarbraum wird nun ebenenweise ein Randbereich ausgewählt, dessen Dicke von der Anzahl der gleichbelegten Randfarbwerte abhängt.

Hat also die jeweils betrachtete Farbvariationsebene einen Randwert, der vielfach belegt ist, weil eine Vielzahl von Farbwerten des Ausgangsfarbraumes in diesen Randfarbwert des Zielfarbraumes umgewandelt wurden, so wird eine nach einer vorgegebenen Funktion entsprechende Anzahl von innerhalb des Farbraumes dahinterliegenden Farbwerten in das Innere des Zielfarbraumes verschoben, das heißt in dahinterliegende Farbwerte umgewandelt. Dieser Schritt wird wiederholt, wobei die Dicke des Verschiebungsbereichs aufgrund der abnehmenden Zahl gleichbelegter Farbwerte ebenfalls abnimmt, bis nur noch eine vorgegebene Anzahl gleichbelegter Farbwerte erreicht ist.

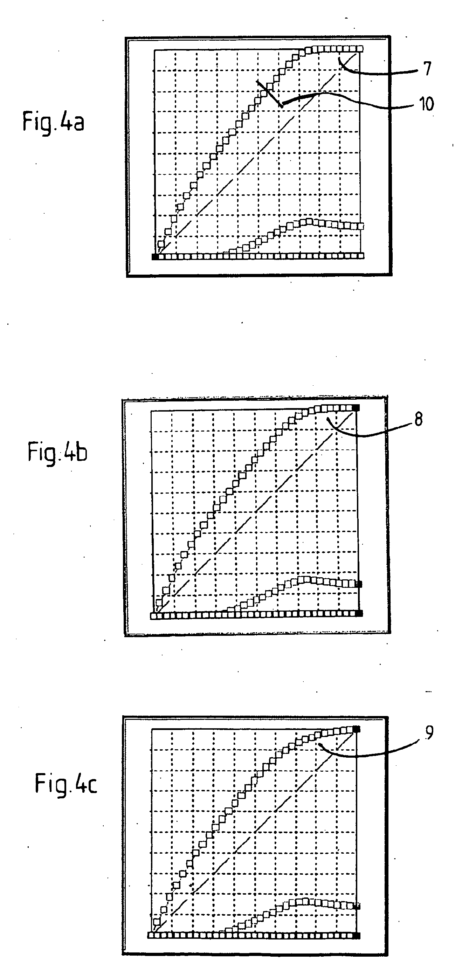

In der Praxis entspricht diese letztbeschriebene Vorgehensweise der Glättung einer Kurve. Wird, wie in Fig. 4 gezeigt, für einen Farbvariationsstrahl des Zielfarbraumes die Farbwertkurve in ein Koordinatensystem eingetragen, zeigt sich, daß die Kurve an ihrem Ende eine Vielzahl gleichbelegter Farbwerte aufweist. In Abhängigkeit von dieser Anzahl wird nun ein entsprechender Bereich davorliegender Farbwerte glättend nach Innen verschoben. Die Zahl der gleichbelegten Farbwerte nimmt ab und die Kurve wird glatter, bis, wie in Fig. 4c gezeigt, eine gut geglättete Kurve von im Zielraum darstellbarer Farbwerte erreicht ist.

Mit dem erfindungsgemäßen Verfahren wird erreicht, daß der Detailverlust insbesondere in gesättigten Farbbereichen auf ein Minimum reduziert wurde. Darüber hinaus kann die Kontraststärke weitgehend erhalten bleiben.

In dem erhaltenen Zielfarbraum findet sich also für jeden Farbwert des Ausgangsfarbraumes ein innerhalb des Zielfarbraumes liegender Farbwert. Aufgrund der angewandten Transformationsregeln lassen sich aber nunmehr durch den Zielfarbraum Darstellungen erzeugen, die dem Original im Ausgangsfarbraum im wesentlichen entsprechen, insbesondere aber für das menschliche Auge im Hinblick auf Details und Kontrastierung gleich sind.

Eine weitere Verbesserung ergibt sich durch die folgende Beschreibung. Bei dem Verfahrensschritt des Skalierens eines Farbraums in Richtung des anderen Farbraums, ob mit oder ohne vorhergehende Verschiebung des einen Farbraums gegenüber dem anderen, geht es darum, Farbwerte an markanten Randbereichen des einen Farbraumes auf vergleichbare markante Farbwerte am Randbereich des anderen Farbraumes zu verschieben und daraus nach einer vorgegebenen Regel sämtliche Farbwerte des einen Farbraumes in entsprechender Parallelität nach einem bestimmten Verhältnis zu verschieben. Auf diese Weise werden Farbräume zumindest in Linien oder Ebenen in Deckung gebracht. Wie oben dargestellt, kann beispielsweise ein Streckenverhältnis multipliziert mit dem sich verändernden Abstand verwendet werden, um die Farbwertverschiebung für jeden einzelnen Punkt zu definieren und auf diese Weise einen Farbraum zumindest in einer Richtung oder entlang einer Ebene mit einem zweiten Farbraum hinsichtlich dessen Ausdehnung in Deckung zu bringen.

Es wird nunmehr vorgeschlagen, die Abbildungsvorschrift durch eine Funktion zu überlagern, mit welcher die Beträge der Verschiebungen der Farbwerte auf andere Farbwerte zusätzlich beeinflußbar sind. So kann beispielsweise eine S-Kurve derart überlagert werden, daß bei größeren Abständen größere Verschiebungen und bei kleineren Abständen kleinere Verschiebungen zusätzlich zu der linearen oder abstandsabhängigen Verschiebungsvorschrift stattfinden. Auf diese Weise kann man beispielsweise helle Werte nur sehr gering, dunkle Werte aber sehr weit verschieben.

Eine weitere Verbesserung betrifft eine Maßnahme, im wesentlichen den Verlauf der sogenannten Grauachse beim Ausgangsfarbraum bei jedweder Art der Transformation zu erhalten.

Die Grauachse ist in Farbräumen in der Regel die Strecke zwischen dem Weißpunkt und dem Schwarzpunkt, die jedoch weniger linienförmig denn säulenförmig räumlich zu sehen ist. Wird nun ein Farbraum verschoben, skaliert oder sonstwie auf einen anderen Farbraum abgebildet, führt dies in der Regel dazu, daß die entlang der Grauachse liegenden Farbwerte ebenfalls auf Zielfarbwerte geführt werden, wo diese beispielsweise farblich modifiziert sind. Ganz allgemein kann dies für einen konkreten Farbwertbereich, aber auch für andere Ebenen, Achsen, Einzelfarben oder dergleichen gelten. Anstelle der Grauachsenfarbwerte kann beispielsweise die erfindungsgemäße Vorgehensweise auch auf eine Farbebene, einen Farbstrahl, einen Helligkeitsbereich oder dergleichen angewandt werden.

Es wird die ursprüngliche Lage der Farbwertbereiche, die erhalten werden sollen, ebenso registriert wie entweder die Bearbeitungsvorgänge wie verschieben, skalieren, umwandeln und dergleichen und/oder die konkreten Zielfarbwerte. Es wird dann anhand einer Funktion für zumindest einen Teil der registrierten Farbwerte eine Rückverschiebung durchgeführt. Dabei kann auch vorgesehen sein, daß ein Strahl, eine Achse oder ein Bereich mit einem Raum umgeben und nach vorgegebenen Regeln rückverschoben wird.

Beim Erhalt der Grauachse beispielsweise kann in Abhängigkeit von der Helligkeit des Wertes die Verschiebung geringer gewählt werden, also je näher man dem Schwarzpunkt kommt, um so größer die Verschiebung gestalten.

Damit kann man selektiv Farbwertbereiche zumindest annähernd wieder in Richtung ihres Ursprungs zurück rechnen, wobei man dies in Abhängigkeit von Parametern differenziert durchführen kann. Auf diese Weise kann eine visuelle Übereinstimmung zwischen der Grauachse des Ausgangsfarbraums und der Grauachse des Zielfarbraums gewährleistet werden.

Eine weitere Verbesserung betrifft ein Verfahren, nach welchem einzelne Farbwerte oder Farbwertbereiche korrigiert werden können. Zu diesem Zweck wird ein einzelner Farbwert bzw. Farbwertbereich im Ausgangsfarbraum festgelegt und in der Zuordnungstabelle der dazu gehöriger Farbwert des Zielfarbraumes in gewünschter Weise verändert, also beispielsweise auf einen helleren Farbwert verschoben, auf einen dunkleren oder auch in der Farbrichtung verändert.

Es ist nunmehr vorgesehen, den ausgewählten Farbwert oder Farbwertbereich im einem vorgegebenen virtuellen Körpergebilde, beispielsweise einer Kugel, einem Ei oder auch unrunden Körpern zu umgeben. Daraus ergibt sich eine einen Körper definierende Menge von Farbwerten um den zu korrigierenden Farbwert herum. Nach einer Funktion, die den Abstand des jeweiligen Farbwerts zum ausgewählten Farbwert berücksichtigt, erfolgt dann eine Verschiebung des gesamten Körper in der Zuordnungsliste der Farbwerte des Zielfarbraumes. Je weiter ein Farbwert von dem ausgewählten Farbwert weg ist, um so geringer erfolgt seine Verschiebung. Auf diese Weise wird erreicht, daß in den Darstellungen die geänderten Farbwertbereiche praktisch mit weichem Übergang in ihre Umgebung eingepaßt sind.

Weitere Vorteile und Merkmale der Erfindung ergeben sich aus der folgenden Beschreibung eines Ausführungsbeispieles anhand der Figuren.

Es zeigen:
- Fig. 1: eine schematische Darstellung des Lab-Modelles;
- Fig. 2: eine schematische Darstellung zur Erläuterung des Verfahrens des Beschneidens von Farbräumen;
- Fig. 3: eine schematische Darstellung zur Erläuterung des Verfahrens des Hineinstauchens eines größeren Quellfarbraumes in einen kleineren Zielfarbraum;
- Fig. 4a bis 4c: Farbwertkurven in einem Koordinatensystem zur Erläuterung der Glättungsfunktionen;
- Fig. 5a bis 5c: eine bildliche schematische Darstellung zur Erläuterung der Veränderung eines Quellfarbraumes gegenüber einem Zielfarbraum.

Bei der in Fig. 1 gezeigten schematischen Darstellung eines Lab-Farbraumes kann man die sich ausschließenden Farbpaarungen Rot/Grün sowie Blau/Gelb erkennen, die praktisch die Äquatorscheibe definieren. Geht man vom Mittelpunkt beispielsweise in Richtung Rot, also +a*, so bedeutet dies, daß ein immer höherer Rotanteil hinzu wächst. Gleiches gilt für die anderen Farbrichtungen und dazwischenliegend natürlich entsprechende Mischungen. Eine als Mittelsäule dargestellte Hell/Dunkel-Skala stellt den L*-Wert dar, der von Schwarz (L=0) bis Weiß (L=100) verläuft. Es ergeben sich somit Helligkeitsebenen für die äquatoriale Farbebene, die bei L=50 den Normalbereich angibt. Auch kann man einen festen Rotwert praktisch parallel zur Helligkeitslinie oder Helligkeitssäule ins Helle oder Dunkle variieren.

Gemäß Fig. 2 ist zu erkennen, wie nach dem Verfahren des Farbmetrischen Rendering Intent der größere Quell- oder Ausgangsfarbraum 1 auf den kleineren Zielfarbraum 2 verkleinert wird. Dies erfolgt nach diesem Verfahren dadurch, daß die in den überstehenden Bereichen 3 liegenden Farbwerte 4 jeweils auf den im Randbereich des Zielfarbraumes 2 liegenden Farbwert 5 gerechnet werden. Dies kommt dem abschneiden der überstehenden Bereiche gleich, denn, soll nach der Zuordnungstabelle der Farbwert 4 des Ausgangsfarbraumes gedruckt werden, so wird der Farbwert 5 am Rand des Zielfarbraumes 2 gedruckt. Die darüber hinausgehenden Bereiche 3 sind somit abgeschnitten.

Gemäß Fig. 3 wird demgegenüber der größere Farbraum 1 in den kleineren Farbraum 2 zu dem Endfarbraum 3 "geschrumpft" bzw. "gestaucht". Alle Punkte des Farbraums 1 werden dabei in Richtung Zentrum durch Umrechnung verschoben und es ergibt sich den Endfarbraum 3, der vollständig im Zielfarbraum 2 enthalten ist.

Wie zu ersehen ist, können die Farbräume von runden oder symmetrischen Körperformen abweichen, je nach Qualität und Kapazität des jeweiligen Gerätes. Dies gilt für digitale Geräte wie Kamera, Monitor und dergleichen, deren Farbfähigkeit im RGB-Modell beschrieben wird ebenso wie für Geräte wie Drucker und dergleichen, deren Farbfähigkeit im CMYK-Modell beschrieben wird.

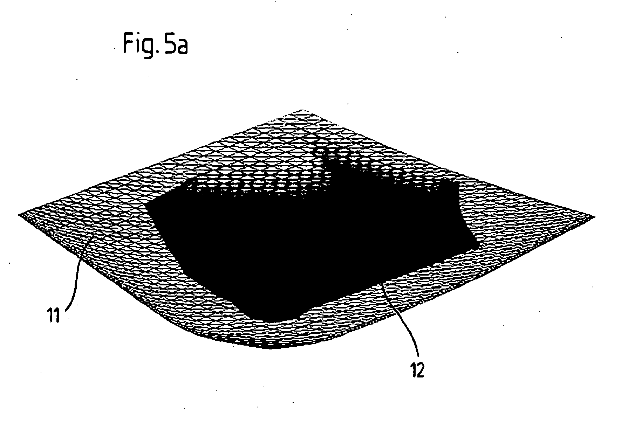

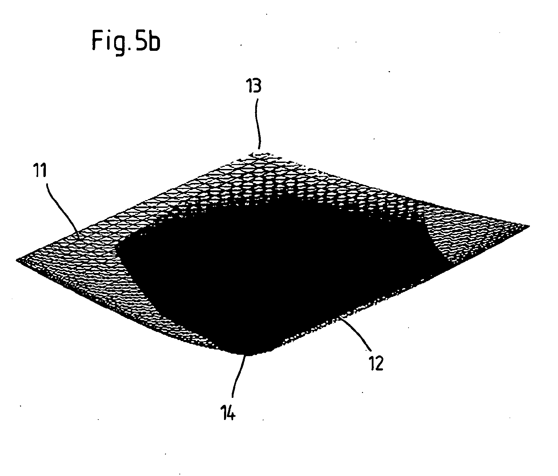

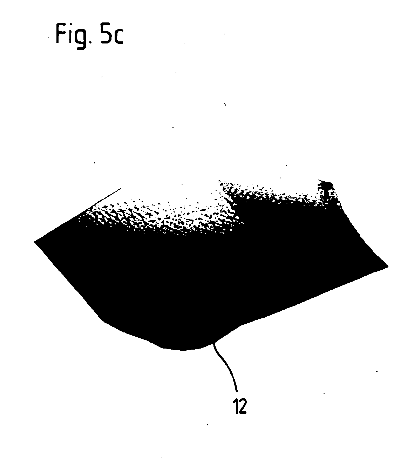

Fign. 5a bis 5c zeigen den erfindungsgemäßen Umwandlungsvorgang, bei welchem der größere Quellfarbraum 11 auf den kleineren Quellfarbraum 12 transformiert wird. Zunächst werden die Farbräume 11 und 12 hinsichtlich ihres Weißpunktes 13 in Deckung gebracht und anschließend der größere Farbraum 11 skaliert so verschoben bzw. umgeformt, daß auch die Schwarzpunkte 14 beider Farbräume in Deckung sind. Dies geschieht durch Verschiebung eines jeden Punktes des größeren Farbraumes 11.

Die überstehenden Bereiche des Farbraumes 11 werden dann in erfindungsgemäßer Weise zunächst auf die nächstliegenden Grenzwerte oder Randfarbwerte des kleineren Farbwertes 11 umgewandelt, dessen Randraum dann nach dem erfindungsgemäßen Verfahren geglättet wird.

Fig. 4 zeigt beispielhaft den Verlauf einer Kurve für eine Farbe. Auf der x-Achse sind die Eingangsfarbwerte, auf der y-Achse die Ausgangsfarbwerte aufgetragen. Die x-Achse läuft von 0-100% der jeweiligen Farbe. Die Kurve zeigt, daß mit steigender Farbintensität die Kurve gegen ein Limit läuft, so daß sich bei dem in Fig. a gezeigten Zustand der Bereich 7 von im wesentlichen gleichen Farbwerten ergibt. In anderen Worten, wann immer aus dem Ausgangszeitraum ein entsprechender Farbwert abgefordert wird, wird im Zielfarbraum jeweils dieser Maximalwert verwendet.

Es wird eine Bereichsgrenze 10 definiert, die im wesentlichen abhängt von der Länge des Bereiches 7 und es werden die jenseits der Grenze liegenden Farbwerte in einen tieferliegenden Bereich umgerechnet, so daß sich, wie in Fig. 4b gezeigt, der Bereich 8 gleicher Farbwerte gegenüber dem in Fig. a gezeigten Bereich 7 verkleinert. Dieser Vorgang wird solange wiederholt, bis sich ein wie in Fig. 4c gezeigter Zustand einer im wesentlichen geglätteten Kurve 9 ergibt.

Die beschriebenen Ausführungsbeispiele dienen nur der Erläuterung und sind nicht beschränkend.

### Bezugszeichenliste

- 1: Ausgangsfarbraum
- 2: Zielfarbraum
- 3: überstehender Bereich
- 4: Farbwert
- 5: Farbwert
- 6: Transformationsvorschrift
- 7: Bereich gleicher Farbwerte
- 8: Bereich gleicher Farbwerte
- 9: geglättete Kurve
- 10: Grenzwert
- 11: Ausgangsfarbraum
- 12: Zielfarbraum
- 13: Weißpunkt
- 14: Schwarzpunkt

## Patentansprüche

1. Verfahren zur Transformation von Farbwerten aus einem Ausgangsfarbraum in einen Zielfarbraum, welche beide in Bezug auf einen definierten Basisfarbraum stehen, wobei wenigstens eine Ebene oder Achse in den Farbräumen einen Verlauf der Helligkeit von hell zu dunkel und dazu quer verlaufende Ebenen Farbvariationen definieren, umfassend die folgenden Schritte
a) verschieben von Ausgangsfarbraum und/oder Zielfarbraum durch Umrechnung aller Farbwerte eines der beiden Farbräume in andere Farbwerte im Basisfarbraum, so dass der Ausgangs- und der Zielfarbraum in Bezug auf wenigstens einen am Rand eines Farbraumes liegenden Farbwert in Deckung stehen,
b) skalieren von Ausgangsfarbraum und/oder Zielfarbraum durch Umrechnung aller Farbwerte eines der beiden Farbräume in andere Farbwerte im Basisfarbraum, so dass der Ausgangs- und der Zielfarbraum in Bezug auf wenigstens eine durch den in Deckung gebrachten Randfarbwert und einen im wesentlichen gegenüberliegenden Randfarbwert definierte Ebene in Deckung stehen,
c) umwandeln eines jeden Farbwertes des Ausgangsfarbraumes, der außerhalb des Zielfarbraumes liegt, in einen diesem Farbwert am nächsten liegenden Farbwert im Randbereich des Zielfarbraumes,
d) verschieben der in einem definierten Randraum des Zielfarbraumes liegenden Farbwerte in das innere des Zielfarbraumes durch Umrechnung in Abhängigkeit von der Anzahl gleicher Randfarbwerte jeweils auf Farbwerte im wesentlichen auf der gleichen Farbvariationsebene bis zum erreichen einer vorgegebenen Anzahl gleicher Randfarbwerte auf der jeweiligen Farbvariationsebene.

## Claims

1. A method for transforming color values from an initial color space to a target color space, both of which are related to a defined basic color space, wherein at least one plane or axis define a course of the brightness from bright to dark and planes running at right angles thereto, define color variations in the color spaces, comprising the following steps
a) displacing the initial color space and/or target color space by converting all of the color values of one of the two color spaces into different color values in the basic color space, so that the initial and the target color space are aligned with reference to at least one color value, which is located at the edge of a color space,
b) scaling the initial color space and/or target color space by converting all of the color values of one of the two color spaces into different color values in the basic color space, so that the initial and the target color space are aligned with reference to at least one plane, which is defined by the edge color value, which has been aligned, and by a substantially opposite edge color value,
c) converting each color value of the initial color space, which is located outside of the target color space, into a color value, which is closest to this color value, in the edge area of the target color space,
d) displacing the color values, which are located in a defined edge area of the target color space, into the interior of the target color space by conversion as a function of the number of identical edge color values in each case to color values substantially on the same color variation plane, until a predetermined number of identical edge color values is attained on the respective color variation plane.

## Revendications

1. Procédé de transformation de valeurs chromatiques à partir d'un espace chromatique source dans un espace chromatique cible qui sont tous deux en relation avec un espace chromatique de base, au moins un plan ou un axe dans les espaces chromatiques définissant une courbe de luminosité de clair à foncé et des plans s'étendant à la transversale de ces derniers définissant des variations chromatiques, comprenant les étapes suivantes :
a) déplacement de l'espace chromatique source et/ou de l'espace chromatique cible par conversion de toutes les valeurs chromatiques de l'un des deux espaces chromatiques en d'autres valeurs chromatiques dans l'espace chromatique de base, de sorte que l'espace chromatique source et cible soient en coïncidence avec au moins une valeur chromatique située au bord d'un espace chromatique,
b) cadrage de l'espace chromatique source et/ou de l'espace chromatique cible par conversion de toutes les valeurs chromatiques de l'un des deux espaces chromatique en d'autres valeurs chromatiques dans l'espace chromatique de base, de sorte que l'espace chromatique source et cible soient en coïncidence avec au moins un plan défini par la valeur chromatique de bord amenée en coïncidence et une valeur chromatique de bord sensiblement opposée,
c) transformation de chacune des valeurs chromatiques de l'espace chromatique source qui se situe hors de l'espace chromatique cible en une valeur chromatique la plus proche de ladite valeur chromatique dans la zone du bord de l'espace chromatique cible,
d) déplacement des valeurs chromatiques situées dans un espace de bord défini de l'espace chromatique cible vers l'intérieur de l'espace chromatique cible par conversion, en fonction du nombre de valeurs chromatiques identiques chaque fois en des valeurs chromatiques sensiblement sur le même plan de variations chromatiques jusqu'à l'obtention d'un nombre défini de valeurs chromatiques identiques sur le plan de variations chromatiques concerné.
